# EUROPEAN PATENT APPLICATION

(11) **EP 4 838 582 A1**
(43) Date of publication of application: **11.11.2026**
(21) Application number: 24915701.7
(22) Date of filing: 18.12.2024
(51) Int. Cl.: H01M 4/62, H01M 4/13, H01M 4/139

(54) **POSITIVE ELECTRODE COMPOSITION, COATING SOLUTION FOR POSITIVE ELECTRODE FORMATION, POSITIVE ELECTRODE, BATTERY, CONDUCTIVE MATERIAL, SLURRY, METHOD FOR MANUFACTURING COATING SOLUTION FOR POSITIVE ELECTRODE FORMATION, AND METHOD FOR MANUFACTURING POSITIVE ELECTRODE**

(30) Priority: 04.01.2024 JP 2024000171
(71) Applicant: Denka Company Limited, Tokyo 103-8338 (JP)
(72) Inventor: ONISHI Kohei, Tokyo 103-8338 (JP); NAGAI Tatsuya, Tokyo 103-8338 (JP)
(74) Representative: Hoffmann Eitle
(86) International application number: PCT/JP2024/044849
(87) International publication number: WO 2025/146778

(57) **Abstract**

Provided is a positive electrode composition including an active material, a binding material, and a conductive material, wherein the conductive material includes: carbon black (A) having an average primary particle diameter of 17 nm or more and 30 nm or less; first carbon nanotubes (B) having an average diameter of 2 nm or more and 15 nm or less; and second carbon nanotubes (C) having an average diameter of 0.5 nm or more and less than 2 nm.

## Description

### TECHNICAL FIELD

The present disclosure relates to a positive electrode composition, a coating solution for positive electrode formation, a positive electrode, a battery, a conductive material, a slurry, a method for manufacturing a coating solution for positive electrode formation, and a method for manufacturing a positive electrode.

### BACKGROUND

As environmental/energy issues become more severe, there are more and more developments of technology aimed at realizing a low-carbon society with a lower dependency on fossil fuels. Examples of such technological developments are wide-ranging and include: the development of low-emission vehicles such as hybrid electric vehicles and electric vehicles, etc.; the development of natural energy power generation/storage systems such as solar power generation and wind power generation, etc.; and the development of next-generation power grids which supply power efficiently and reduce transmission loss, etc.

One key device that is necessary in all of the foregoing technology is a battery. Such batteries are required to have high energy density so that systems can be made smaller. Further, such batteries are also required to have high output characteristics so that power can be supplied stably without being affected by the temperature of the usage environment. Furthermore, such batteries are also required to have good cycle characteristics, etc., which are able to stand use over long periods. Due to the foregoing, conventional lead storage batteries, nickel-cadmium batteries, and nickel-hydrogen batteries are rapidly being replaced by lithium-ion secondary batteries which have higher energy densities, output characteristics, and cycle characteristics.

Conventionally, a positive electrode of a lithium-ion secondary battery is produced by coating a current collector with a positive electrode paste that contains a positive electrode active material, a conductive material, and a binding material (also called a binder). Hitherto, lithium-containing composite oxides such as lithium cobalt oxide and lithium manganese oxide, etc., have been used as positive electrode active materials. Further, since positive electrode active materials have poor conductivity, conductive materials such as carbon black, etc., have been added to positive electrode pastes with an objective of imparting conductivity (for example Patent Document 1).

### CITATION LIST

### PATENT LITERATURE

Patent Document 1: JP 2008-227481 A

### SUMMARY OF INVENTION

### TECHNICAL PROBLEM

In recent years, there are demands for further improvements in the properties of batteries such as lithium-ion secondary batteries, etc.

One objective of the present disclosure is to provide a positive electrode composition that is capable of realizing a battery having excellent cycle characteristics. Further, one objective of the present disclosure is to provide a coating solution for positive electrode formation that is capable of realizing a battery having excellent cycle characteristics. Further, one objective of the present disclosure is to provide a positive electrode that is capable of realizing a battery having excellent cycle characteristics. Further, one objective of the present disclosure is to provide a battery having excellent cycle characteristics. Further, one objective of the present disclosure is to provide: a conductive material that is capable of realizing a battery having excellent cycle characteristics; and a slurry including the conductive material. Furthermore, one objective of the present disclosure is to provide: a method for manufacturing a coating solution for positive electrode formation which enables the coating solution for positive electrode formation described above to be manufactured easily; and a method for manufacturing a positive electrode which enables the positive electrode described above to be manufactured easily.

### SOLUTION TO PROBLEM

The present disclosure, for example, relates to [1] to [16] below.
[1] A positive electrode composition including an active material, a binding material, and a conductive material,
   wherein the conductive material includes:
   carbon black (A) having an average primary particle diameter of 17 nm or more and 30 nm or less;
   first carbon nanotubes (B) having an average diameter of 2 nm or more and 15 nm or less; and
   second carbon nanotubes (C) having an average diameter of 0.5 nm or more and less than 2 nm.
[2] The positive electrode composition described in [1], wherein the carbon black (A) is selected from the group consisting of furnace black, acetylene black, and ketjen black.
[3] The positive electrode composition described in [1] or [2], wherein the carbon black (A) has a BET specific surface area of 100 m²/g or more and 900 m²/g or less.
[4] The positive electrode composition described in any one of [1] to [3], wherein the content of the carbon black (A) is 30 mass% or more and 90 mass% or less with respect to the total mass of the conductive material.
[5] The positive electrode composition described in any one of [1] to [4], wherein the first carbon nanotubes (B) have a peak ratio (D/G) of a D-band to a G-band of 0.1 or more and 1.5 or less in a Raman spectrum.
[6] The positive electrode composition described in any one of [1] to [5], wherein the first carbon nanotubes (B) have a peak ratio (D/G) of a D-band to a G-band of 0.3 or more and 1.4 or less in a Raman spectrum.
[7] The positive electrode composition described in any one of [1] to [6], wherein the content of the first carbon nanotubes (B) is 5 mass% or more and 50 mass% or less with respect to the total mass of the conductive material.
[8] The positive electrode composition described in any one of [1] to [7], wherein the content of the second carbon nanotubes (C) is 1 mass% or more and 45 mass% or less with respect to the total mass of the conductive material.
[9] A coating solution for positive electrode formation, the coating solution including the positive electrode composition described in any one of [1] to [8] and a dispersion medium.
[10] A positive electrode including the positive electrode composition described in any one of [1] to [8].
[11] A battery including the positive electrode described in [10].
[12] A conductive material including:
   carbon black (A) having an average primary particle diameter of 17 nm or more and 30 nm or less;
   first carbon nanotubes (B) having an average diameter of 2 nm or more and 15 nm or less; and
   second carbon nanotubes (C) having an average diameter of 0.5 nm or more and less than 2 nm.
[13] A slurry including the conductive material described in [12] and a dispersion medium.
[14] A method for manufacturing a coating solution for positive electrode formation, the method including a mixing step for mixing an active material, a binding material, a conductive material, and a dispersion medium,
   wherein the conductive material includes: carbon black (A) having an average primary particle diameter of 17 nm or more and 30 nm or less; first carbon nanotubes (B) having an average diameter of 2 nm or more and 15 nm or less; and second carbon nanotubes (C) having an average diameter of 0.5 nm or more and less than 2 nm.
[15] The manufacturing method described in [14], wherein the mixing step is a step for mixing: the active material; a binding material solution containing the binding material; a slurry (A) containing the carbon black (A); a slurry (B) containing the first carbon nanotubes (B); and a slurry (C) containing the second carbon nanotubes (C).
[16] A method for manufacturing a positive electrode, the method including a step for coating the coating solution for positive electrode formation manufactured by the manufacturing method described in [14] or [15] on
   a current collector to form, on the current collector, a mixed material layer including the active material, the binding material, and the conductive material.

### EFFECTS OF INVENTION

According to the present disclosure, there is provided a positive electrode composition that is capable of realizing a battery having excellent cycle characteristics. Further, according to the present disclosure, there is provided a coating solution for positive electrode formation that is capable of realizing a battery having excellent cycle characteristics. Further, according to the present disclosure, there is provided a positive electrode that is capable of realizing a battery having excellent cycle characteristics. Further, according to the present disclosure, there is provided a battery having excellent cycle characteristics. Further, according to the present disclosure, there are provided: a conductive material that is capable of realizing a battery having excellent cycle characteristics; and a slurry including the conductive material. Furthermore, according to the present disclosure, there are provided: a method for manufacturing a coating solution for positive electrode formation which enables the coating solution for positive electrode formation described above to be manufactured easily; and a method for manufacturing a positive electrode which enables the positive electrode described above to be manufactured easily.

### DESCRIPTION OF EMBODIMENTS

Preferred embodiments of the present disclosure shall be explained in detail below. Note that carbon black may be abbreviated to "CB" and carbon nanotubes may be abbreviated to "CNT" herein. Further, a hyphen "-" herein is a symbol used to indicate a numerical value range which includes the numerical values before and after the hyphen. Specifically, "X-Y"(where X and Y are both numerical values) means "X or more and Y or less".

### (Positive electrode composition)

A positive electrode composition of the present embodiment includes an active material, a binding material, and a conductive material. In the present embodiment, the conductive material includes: carbon black (A) having an average primary particle diameter of 17 nm or more and 30 nm or less; first carbon nanotubes (B) having an average diameter of 2 nm or more and 15 nm or less; and second carbon nanotubes (C) having an average diameter of 0.5 nm or more and less than 2 nm.

The positive electrode composition of the present embodiment may be a material constituting the mixed material layer in the positive electrode. By using a positive electrode including a mixed material layer configured from the positive electrode composition of the present embodiment, a battery having excellent cycle characteristics is realized.

The reasons why the effect described above is exhibited due to the positive electrode composition of the present embodiment are thought to be as described below.
The positive electrode composition of the present embodiment has combined therein: carbon black which has a spherical structure; and carbon nanotubes which have a fibrous structure. It is thought that due to the combination of carbon black and carbon nanotubes, the positive electrode composition of the present embodiment has improved properties for tracking the expansion and contraction of the positive electrode composition that occurs when a battery is charged and discharged. Further, the positive electrode active material of the present embodiment includes two kinds of carbon nanotubes which have different diameters. It is thought that due thereto, the tracking properties described above are further improved and, even when a battery is repeatedly charged and discharged, it is easy to maintain a good conductive network in the positive electrode, and thus, a battery having excellent cycle characteristics is realized.

Each component of the positive electrode composition of the present embodiment shall be described in detail below.

### <Conductive material>

The positive electrode composition of the present embodiment includes carbon black (A) as a conductive material. The average primary particle diameter of the carbon black (A) is 17 nm or more and 30 nm or less.

When the average primary particle diameter of the carbon black (A) is 17 nm or more, a conductive network formed inside the positive electrode is likely to develop. Further, when the average primary particle diameter of the carbon black (A) is 30 nm or less, it is easy for a conductive network formed inside the positive electrode to develop. From the viewpoint that the foregoing effect is obtained to a more remarkable degree, the average primary particle diameter of the carbon black (A) may be 27 nm or less, and may be 25 nm or less.

Note that, herein, the average primary particle diameter of the carbon black (A) can be determined by measuring 100 or more carbon black primary particle diameters selected randomly from an image of a transmission electron microscope (TEM) with a magnification of 50,000 and calculating the average value thereof. The primary particles of the carbon black have a small aspect ratio and a shape close to a true sphere, but are not completely true spheres. Here, in the present description, the greatest segment among segments connecting two points on a primary particle circumference in a TEM image is used as the primary particle diameter of the carbon black.

The carbon black (A) may, for example, be selected from the group consisting of acetylene black, furnace black, and ketjen black, and is preferably acetylene black.

The BET specific surface area of the carbon black (A) may, for example, be 100 m²/g or more and may be 110 m²/g or more, 120 m²/g or more, or 130 m²/g or more. By setting such a value, a conductive network formed in the positive electrode tends to develop more. The BET specific surface area of the carbon black (A) may, for example, be 900 m²/g or less and may be 890 m²/g or less, 880 m²/g or less, or 870 m²/g or less. By setting such a value, a conductive network formed in the positive electrode tends to develop more. That is, the BET specific surface area of the carbon black (A) may, for example, be 100-900 m²/g, 100-890 m²/g, 100-880 m²/g, 100-870 m²/g, 110-900 m²/g, 110-890 m²/g, 110-880 m²/g, 110-870 m²/g, 120-900 m²/g, 120-890 m²/g, 120-880 m²/g, 120-870 m²/g, 130-900 m²/g, 130-890 m²/g, 130-880 m²/g, or 130-870 m²/g.

Note that, herein, the BET specific surface area of the carbon black (A) is a value measured by a static volumetric method in conformance with JIS Z 8830 using nitrogen as an adsorbate.

The content of the carbon black (A) may, for example, be 30 mass% or more with respect to the total mass of the conductive material, and from the viewpoint that cycle characteristics are further improved, may be 35 mass% or more, 40 mass% or more, 45 mass% or more, 50 mass% or more, 55 mass% or more, 60 mass% or more, or 65 mass% or more. Further, the content of the carbon black (A) may, for example, be 90 mass% or less with respect to the total mass of the conductive material, and from the viewpoint that cycle characteristics are further improved, may be 85 mass% or less, 80 mass% or less, or 75 mass% or less. That is, the content of the carbon black (A) with respect to the total mass of the conductive material may, for example, be 30-90 mass%, 30-85 mass%, 30-80 mass%, 30-75 mass%, 35-90 mass%, 35-85 mass%, 35-80 mass%, 35-75 mass%, 40-90 mass%, 40-85 mass%, 40-80 mass%, 40-75 mass%, 45-90 mass%, 45-85 mass%, 45-80 mass%, 45-75 mass%, 50-90 mass%, 50-85 mass%, 50-80 mass%, 50-75 mass%, 55-90 mass%, 55-85 mass%, 55-80 mass%, 55-75 mass%, 60-90 mass%, 60-85 mass%, 60-80 mass%, 60-75 mass%, 65-90 mass%, 65-85 mass%, 65-80 mass%, or 65-75 mass%.

The positive electrode composition of the present embodiment further includes first carbon nanotubes (B) as a conductive material. The average diameter of the first carbon nanotubes (B) is 2 nm or more and 15 nm or less.

From the viewpoint that it is easier for a conductive network to develop inside the positive electrode, the average diameter of the first carbon nanotubes (B) may be 3 nm or more, 4 nm or more, or 5 nm or more. Further, from the viewpoint that it is easier for a conductive network to develop inside the positive electrode, the average diameter of the first carbon nanotubes (B) may be 13 nm or less, 11 nm or less, or 10 nm or less. That is, the average diameter of the first carbon nanotubes (B) may, for example, be 2-15 nm, 2-13 nm, 2-11 nm, 2-10 nm, 3-15 nm, 3-13 nm, 3-11 nm, 3-10 nm, 4-15 nm, 4-13 nm, 4-11 nm, 4-10 nm, 5-15 nm, 5-13 nm, 5-11 nm, or 5-10 nm.

Note that herein, the average diameter of the carbon nanotubes indicates an average value of diameters measured on the basis of images when the carbon nanotubes are observed with a transmission electron microscope (TEM). Specifically, the average diameter of the carbon nanotubes was obtained by using a transmission electron microscope JEM-2000 FX (manufactured by JEOL Ltd.) to take ten images of the carbon nanotubes at a magnification of 200,000, measuring, by means of image analysis, the diameters of 100 nanotubes randomly extracted from the obtained images, and calculating the arithmetic average thereof.

The first carbon nanotubes (B) may be multi-walled carbon nanotubes (MWCNT). The multi-walled carbon nanotubes may be carbon nanotubes having a structure in which three or more layers of graphene sheets are laminated in a coaxial tubular manner.

In carbon nanotubes, a peak ratio (D/G) of a D-band to a G-band in a Raman spectrum may serve as an index for evaluating the crystallinity of the carbon nanotubes. The peak ratio (D/G) of the first carbon nanotubes (B) may, for example, be 0.1 or more, and from the viewpoint that conductivity further improves, may be 0.2 or more, 0.3 or more, 0.4 or more, 0.5 or more, or 0.6 or more. Further, the peak ratio (D/G) of the first carbon nanotubes (B) may, for example, be 1.5 or less, and from the viewpoint that conductivity further improves, may be 1.4 or less, 1.3 or less, 1.2 or less, 1.1 or less, 1.0 or less, or 0.9 or less. That is, the peak ratio (D/G) of the first carbon nanotubes (B) may, for example, be 0.1-1.5, 0.1-1.4, 0.1-1.3, 0.1-1.2, 0.1-1.1, 0.1-1.0, 0.1-0.9, 0.2-1.5, 0.2-1.4, 0.2-1.3, 0.2-1.2, 0.2-1.1, 0.2-1.0, 0.2-0.9, 0.3-1.5, 0.3-1.4, 0.3-1.3, 0.3-1.2, 0.3-1.1, 0.3-1.0, 0.3-0.9, 0.4-1.5, 0.4-1.4, 0.4-1.3, 0.4-1.2, 0.4-1.1, 0.4-1.0, 0.4-0.9, 0.5-1.5, 0.5-1.4, 0.5-1.3, 0.5-1.2, 0.5-1.1, 0.5-1.0, 0.5-0.9, 0.6-1.5, 0.6-1.4, 0.6-1.3, 0.6-1.2, 0.6-1.1, 0.6-1.0, or 0.6-0.9.

Note that herein, vibration modes called a G-band (near 1600 cm⁻¹) and a D-band (near 1350 cm⁻¹) were observed in a Raman spectrum of the carbon nanotubes measured by using a laser microscope Raman system ("Nicolet Almega XR" manufactured by Thermo Fisher Scientific Inc.). The G-band is a vibration mode derived from the hexagonal lattice structure of graphite which is the cylindrical surface of the carbon nanotubes, and the D-band is a vibration mode derived from a non-crystalline location. Carbon nanotubes can be evaluated as having a higher crystallinity, the lower is the peak intensity ratio (D/G ratio) of the D-band to the G-band.

Commercially available carbon nanotubes may be used as the first carbon nanotubes (B). For example, Flotube 6000, Flotube 7000 (both MWCNT manufactured by Cnano Technology Ltd.), etc., may be used as the first carbon nanotubes (B).

The content of the first carbon nanotubes (B) may, for example, be 5 mass% or more with respect to the total mass of the conductive material, and from the viewpoint that cycle characteristics are further improved, may be 10 mass% or more, 15 mass% or more, 18 mass% or more, 20 mass% or more, or 22 mass% or more. Further, the content of the first carbon nanotubes (B) may, for example, be 50 mass% or less with respect to the total mass of the conductive material, and from the viewpoint that cycle characteristics are further improved, may be 45 mass% or less, 40 mass% or less, or 35 mass% or less, 30 mass% or less, or 28 mass% or less. That is, the content of the first carbon nanotubes (B) with respect to the total mass of the conductive material may, for example, be 5-50 mass%, 5-45 mass%, 5-40 mass%, 5-35 mass%, 5-30 mass%, 5-28 mass%, 10-50 mass%, 10-45 mass%, 10-40 mass%, 10-35 mass%, 10-30 mass%, 10-28 mass%, 15-50 mass%, 15-45 mass%, 15-40 mass%, 15-35 mass%, 15-30 mass%, 15-28 mass%, 18-50 mass%, 18-45 mass%, 18-40 mass%, 18-35 mass%, 18-30 mass%, 18-28 mass%, 20-50 mass%, 20-45 mass%, 20-40 mass%, 20-35 mass%, 20-30 mass%, 20-28 mass%, 22-50 mass%, 22-45 mass%, 22-40 mass%, 22-35 mass%, 22-30 mass%, or 22-28 mass%.

The positive electrode composition of the present embodiment further includes second carbon nanotubes (C) as a conductive material. The average diameter of the second carbon nanotubes (C) is 0.5 nm or more and less than 2 nm.

From the viewpoint that it is easier for a conductive network to develop inside the positive electrode, the average diameter of the second carbon nanotubes (C) may be 0.6 nm or more or 0.7 nm or more. Further, from the viewpoint that it is easier for a conductive network to develop inside the positive electrode, the average diameter of the second carbon black (C) may be 1.7 nm or less, 1.5 nm or less, 1.3 nm or less, 1.1 nm or less, or 1.0 nm or less. That is, the average diameter of the second carbon nanotubes (C) may, for example, be 0.5 nm or more and less than 2 nm, 0.5-1.7 nm, 0.5-1.5 nm, 0.5-1.3 nm, 0.5-1.1 nm, 0.5-1.0 nm, 0.6 nm or more and less than 2 nm, 0.6-1.7 nm, 0.6-1.5 nm, 0.6-1.3 nm, 0.6-1.1 nm, 0.6-1.0 nm, 0.7 nm or more and less than 2 nm, 0.7-1.7 nm, 0.7-1.5 nm, 0.7-1.3 nm, 0.7-1.1 nm, or 0.7-1.0 nm.

The second carbon nanotubes (C) may be single-walled carbon nanotubes (SWCNT) or double-walled carbon nanotubes (DWCNT). The single-walled carbon nanotubes may be carbon nanotubes having a tubular structure including a graphene sheet. The double-walled carbon nanotubes may be carbon nanotubes having a structure in which two layers of graphene sheets are laminated in a coaxial tubular manner.

The peak ratio (D/G) of the second carbon nanotubes (C) may, for example, be less than 0.3, and from the viewpoint that conductivity further improves, may be less than 0.2 or less than 0.1. Further, the peak ratio (D/G) of the second carbon nanotubes (C) may, for example, be 0.01 or more, and from the viewpoint that conductivity further improves, may be 0.02 or more, 0.03 or more, 0.04 or more, or 0.05 or more. That is, the peak ratio (D/G) of the second carbon nanotubes (C) may, for example, be 0.01 or more and less than 0.3, 0.01 or more and less than 0.2, 0.01 or more and less than 0.1, 0.02 or more and less than 0.3, 0.02 or more and less than 0.2, 0.02 or more and less than 0.1, 0.03 or more and less than 0.3, 0.03 or more and less than 0.2, 0.03 or more and less than 0.1, 0.04 or more and less than 0.3, 0.04 or more and less than 0.2, 0.04 or more and less than 0.1, 0.05 or more and less than 0.3, 0.05 or more and less than 0.2, or 0.05 or more and less than 0.1.

Commercially available carbon nanotubes may be used as the second carbon nanotubes (C). For example, Signis CG300 (SWCNT manufactured by Chasm), etc., may be used as the second carbon nanotubes (C).

The content of the second carbon nanotubes (C) may, for example, be 1 mass% or more with respect to the total mass of the conductive material, and from the viewpoint that cycle characteristics are further improved, may be 3 mass% or more, 5 mass% or more, 10 mass% or more, 15 mass% or more, or 18 mass% or more, 20 mass% or more, or 22 mass% or more. Further, the content of the first carbon nanotubes (C) may, for example, be 45 mass% or less with respect to the total mass of the conductive material, and from the viewpoint that cycle characteristics are further improved, may be 40 mass% or less, 35 mass% or less, or 30 mass% or less, 28 mass% or less, or 25 mass% or less. That is, the content of the second carbon nanotubes (C) with respect to the total mass of the conductive material may, for example, be 1-45 mass%, 1-40 mass%, 1-35 mass%, 1-30 mass%, 1-28 mass%, 1-25 mass%, 3-45 mass%, 3-40 mass%, 3-35 mass%, 3-30 mass%, 3-28 mass%, 3-25 mass%, 5-45 mass%, 5-40 mass%, 5-35 mass%, 5-30 mass%, 5-28 mass%, 5-25 mass%, 10-45 mass%, 10-40 mass%, 10-35 mass%, 10-30 mass%, 10-28 mass%, 10-25 mass%, 15-45 mass%, 15-40 mass%, 15-35 mass%, 15-30 mass%, 15-28 mass%, 15-25 mass%, 18-45 mass%, 18-40 mass%, 18-35 mass%, 18-30 mass%, 18-28 mass%, 18-25 mass%, 20-45 mass%, 20-40 mass%, 20-35 mass%, 20-30 mass%, 20-28 mass%, 20-25 mass%, 22-45 mass%, 22-40 mass%, 22-35 mass%, 22-30 mass%, 22-28 mass%, or 22-25 mass%.

Other than the carbon black (A), the first carbon nanotubes (B), and the second carbon nanotubes (C), the positive electrode composition of the present embodiment may further include another component (D) as a conductive material.

Examples of the component (D) include graphene, graphite, and porous carbon, etc.

The content of the component (D) may, for example, be less than 50 mass% with respect to the total mass of the conductive material. From the viewpoint that the effect described above due to combining the carbon black (A), the first carbon nanotubes (B), and the second carbon nanotubes (C) can be obtained to a more remarkable extent, the content of the component (D) with respect to the total mass of the conductive material may, for example, be 40 mass% or less, 30 mass% or less, 20 mass% or less, 10 mass% or less, 5 mass% or less, 3 mass% or less, or 1 mass% or less, and also may be 0 mass%. That is, the total content of the carbon black (A), the first carbon nanotubes (B), and the second carbon nanotubes (C) may, for example, be more than 50 mass% with respect to the total mass of the conductive material, and from the viewpoint that the effects described above due to combining the carbon black (A), the first carbon nanotubes (B), and the second carbon nanotubes (C) can be obtained to a more remarkable extent, the total content of the carbon black (A), the first carbon nanotubes (B), and the second carbon nanotubes (C) with respect to the total mass of the conductive material may be 60 mass% or more, 70 mass% or more, 80 mass% or more, 90 mass% or more, 95 mass% or more, 97 mass% or more, or 99 mass% or more, and may also be 100 mass%.

The content of the conductive material may, for example, be 0.05 mass% or more with respect to the total mass of the positive electrode composition, and from the viewpoint that it is easier for a conductive network to develop, may be 0.1 mass% or more, 0.3 mass% or more, or 0.5 mass% or more. Further, the content of the conductive material may, for example, be 10 mass% or less with respect to the total mass of the positive electrode composition, and from the viewpoint that a conductive network is sufficiently formed, may be 5 mass% or less, 3 mass% or less, or 1 mass% or less. That is, the content of the conductive material with respect to the total mass of the positive electrode composition may, for example, be 0.05-10 mass%, 0.05-5 mass%, 0.05-3 mass%, 0.05-1 mass%, 0.1-10 mass%, 0.1-5 mass%, 0.1-3 mass%, 0.1-1 mass%, 0.3-10 mass%, 0.3-5 mass%, 0.3-3 mass%, 0.3-1 mass%, 0.5-10 mass%, 0.5-5 mass%, 0.5-3 mass%, or 0.5-1 mass%.

### <Active material>

The positive electrode composition of the present embodiment includes an active material. The active material may be a material that is capable of reversibly storing and discharging cations. The active material may also be called a positive electrode active material.

The active material is not particularly limited and it is, for example, possible to use, without any particular limitations, a publicly-known active material that is used in lithium-ion secondary batteries. Examples of the active material include lithium cobalt oxide, lithium nickel oxide, lithium manganese oxide, lithium nickel manganese cobalt oxide, and lithium iron phosphate, etc.

The active material may, for example, be a lithium-containing composite oxide that includes manganese or a lithium-containing polyanion compound with a volume resistivity of 1×10⁴ Ω·cm or more. Examples of a lithium-containing composite oxide that includes manganese include: lithium manganese oxides such as LiMnO₂, LiMnO₃, LiMn₂O₃, and Li₁₊ₓMn₂₋ₓO₄ (where x=0-0.33), etc.; and composite oxides which include one or more transition metal elements such as LiMnₓNi_{y}Co_{z}O₂ (where x+y+z=1, 0≤y<1, 0≤z<1, and 0≤x<1) , Li₁₊ₓMn_{2-x-y}M_{y}O₄ (where x=0-0.33, y=0-1.0, and 2-x-y>0), LiMn₂₋ₓMₓO₂ (where x=0.01-0.1), and Li₂Mn₃MO₈, etc. Examples of a lithium-containing polyanion compound include polyanion compounds such as LiFePO₄, LiMnPO₄, and Li₂MPO₄F (where M is at least one metal selected from Co, Ni, Fe, Cr, and Zn). M in each compositional formula is at least one selected from the group consisting of Fe, Co, Ni, Al, Cu, Mg, Cr, Zn, and Ta.

From the perspective that there is sufficiently excellent binding between the conductive material and the binding material and that it is easier to obtain a battery having more excellent cycle properties, the average particle diameter (D₅₀) of the active material may, for example, be 20 µm or less or 10 µm or less. The average particle diameter (D₅₀) of the active material can be measured by a laser diffraction/scattering method. The average particle diameter (D₅₀) of the active material may, for example, be 1 µm or more. That is, the average particle diameter (D₅₀) of the active material may, for example, be 1-20 µm or 1-10 µm.

The content of the active material may, for example, be 80 mass% or more with respect to the total mass of the positive electrode composition, and from the viewpoint that battery capacity is further improved, may be 85 mass% or more, 90 mass% or more, or 95 mass% or more. Further, the content of the active material may, for example, be 99.9 mass% or less with respect to the total mass of the positive electrode composition, and from the viewpoint that battery capacity is sufficiently obtained and that it is easier to obtain the effects described above due to the conductive material to a more remarkable degree, the content of the active material with respect to the total mass of the positive electrode composition may be 99 mass% or less, 98 mass% or less, or 97 mass% or less. That is, the content of the active material with respect to the total mass of the positive electrode composition may, for example, be 80-99.9 mass%, 80-99 mass%, 80-98 mass%, 80-97 mass%, 85-99.9 mass%, 85-99 mass%, 85-98 mass%, 85-97 mass%, 90-99.9 mass%, 90-99 mass%, 90-98 mass%, 90-97 mass%, 95-99.9 mass%, 95-99 mass%, 95-98 mass%, or 95-97 mass%.

### <Binding material>

The binding material should be a material that is capable of binding the active material and the conductive material, and that can maintain the shape of the mixed material layer.

Examples of the binding material include polyvinylidene fluoride, polytetrafluoroethylene, styrene-butadiene copolymers, and (meth)acrylic acid ester copolymers, etc. The polymeric structure of the binding material may, for example, be a random copolymer, an alternating copolymer, a grafted copolymer, or a block copolymer, etc. From the perspective that voltage resistance is excellent, polyvinylidene fluoride is preferred as the binding material.

The content of the binding material may, for example, be 0.5 mass% or more with respect to the total mass of the positive electrode composition, and from the viewpoint that binding properties become better, may be 1 mass% or more, 1.5 mass% or more, or 2 mass% or more. Further, the content of the binding material may, for example, be 10 mass% or less with respect to the total mass of the positive electrode composition, and from the viewpoint that battery capacity is further improved, may be 8 mass% or less, 6 mass% or less, or 4 mass% or less. That is, the content of the binding material with respect to the total mass of the positive electrode composition may, for example, be 0.5-10 mass%, 0.5-8 mass%, 0.5-6 mass%, 0.5-4 mass%, 1-10 mass%, 1-8 mass%, 1-6 mass%, 1-4 mass%, 1.5-10 mass%, 1.5-8 mass%, 1.5-6 mass%, 1.5-4 mass%, 2-10 mass%, 2-8 mass%, 2-6 mass%, or 2-4 mass%.

The positive electrode composition of the present embodiment may further include a dispersing agent as a component other than the active material, the binding material, and the conductive material.

### <Dispersing agent>

The dispersing agent is a component that has a function of assisting dispersion of the conductive material in the dispersion medium. When the positive electrode composition is manufactured by using a slurry in which the conductive material is dispersed in a dispersion medium, the dispersing agent may be included in the positive electrode composition.

Examples of the dispersing agent include high-molecular weight dispersing agents and low-molecular weight dispersing agents, etc., and from the viewpoint of long-term dispersion stability of the conductive material, high-molecular dispersing agents are preferred. The dispersing agent may, for example, be a dispersing agent selected from the group consisting of polyvinyl alcohol, polyvinylpyrrolidone, polyvinyl butyral, carboxymethylcellulose and salts thereof, polyvinyl acetal, polyvinyl acetate, polyvinylamine, and polyvinyl formal.

The content of the dispersing agent may, for example, be 100 parts by mass or less with respect to 100 parts by mass of the conductive material, and from the viewpoint of suppressing a reduction in conductivity due to the dispersing agent, may be 80 parts by mass or less, 60 parts by mass or less, or 40 parts by mass or less. When the positive electrode composition of the present embodiment includes a dispersing agent, the content of the dispersing agent may, for example, be 5 parts by mass or more with respect to 100 parts by mass of the conductive material, and from the viewpoint that the dispersibility of the conductive material is further improved, may be 10 parts by mass or more, 15 parts by mass or more, or 20 parts by mass or more. That is, the content of the dispersing agent with respect to 100 parts by mass of the conductive material may, for example, be 5-100 parts by mass, 5-80 parts by mass, 5-60 parts by mass, 5-40 parts by mass, 10-100 parts by mass, 10-80 parts by mass, 10-60 parts by mass, 10-40 parts by mass, 15-100 parts by mass, 15-80 parts by mass, 15-60 parts by mass, 15-40 parts by mass, 20-100 parts by mass, 20-80 parts by mass, 20-60 parts by mass, or 20-40 parts by mass.

The content of the dispersing agent may, for example, be 10 mass% or less with respect to the total mass of the positive electrode composition, and from the viewpoint of suppressing a reduction in conductivity due to the dispersing agent, may be 5 mass% or less, 3 mass% or less, or 1 mass% or less. When the positive electrode composition of the present embodiment includes a dispersing agent, the content of the dispersing agent may, for example, be 0.05 mass% or more with respect to the total mass of the positive electrode composition, and from the viewpoint that the dispersibility of the conductive material is further improved, may be 0.1 mass% or more, 0.3 mass% or more, or 0.5 mass% or more. That is, the content of the dispersing agent with respect to the total mass of the positive electrode composition may, for example, be 0.05-10 mass%, 0.05-5 mass%, 0.05-3 mass%, 0.05-1 mass%, 0.1-10 mass%, 0.1-5 mass%, 0.1-3 mass%, 0.1-1 mass%, 0.3-10 mass%, 0.3-5 mass%, 0.3-3 mass%, 0.3-1 mass%, 0.5-10 mass%, 0.5-5 mass%, 0.5-3 mass%, or 0.5-1 mass%.

The positive electrode composition of the present embodiment may further include a component other than the active material, the binding material, and the conductive material.

Examples of the other component include wetting agents and defoaming agents, etc.

The content of the other component with respect to the total mass of the positive electrode composition may, for example, be 5 mass% or less, may be 3 mass% or less, 2 mass% or less, 1 mass% or less, 0.5 mass% or less, 0.3 mass% or less, 0.2 mass% or less, or 0.1 mass% or less, and may be 0 mass%. That is, the total content of the active material, the binding material, and the conductive material (which may also be the total content of the active material, the binding material, the conductive material, and the dispersing agent) may, for example, be 95 mass% or more with respect to the total mass of the positive electrode composition, may be 97 mass% or more, 98 mass% or more, 99 mass% or more, 99.5 mass% or more, 99.7 mass% or more, 99.8 mass% or more, or 99.9 mass% or more, and may be 100 mass%.

The positive electrode composition of the present embodiment may be a material constituting the mixed material layer in the positive electrode. That is, the positive electrode composition of the present embodiment may be molded in layer form.

The positive electrode composition of the present embodiment may be formed, for example, by coating and drying a coating solution for positive electrode formation, which is described below.

### (Coating solution for positive electrode formation)

The coating solution for positive electrode formation of the present embodiment includes an active material, a binding material, a conductive material, and a dispersion medium. Further, the coating solution for positive electrode formation may further include a dispersing agent.

Each of the active material, the binding material, the conductive material, and the dispersing agent in the coating solution for positive electrode formation of the present embodiment may be the same as the active material, the binding material, the conductive material, and the dispersing agent in the positive electrode composition described above. That is, the coating solution for positive electrode formation of the present embodiment may also be referred to as a coating solution including the positive electrode composition and the dispersing agent which are described above.

The contents (with respect to the total mass of the solid content in the coating solution for positive electrode formation) of the active material, the binding material, the conductive material, and the dispersing agent in the coating solution for positive electrode formation of the present embodiment may the same, respectively, as the contents (with respect to the total mass of the positive electrode composition) of the active material, the binding material, the conductive material, and the dispersing agent in the positive electrode composition described above.

The dispersion medium should be a dispersion medium in which each component in the coating solution can be dispersed. Examples of the dispersion medium include water, N-methyl-2-pyrrolidone, cyclohexane, methyl ethyl ketone, and methyl isobutyl ketone, etc. Among the foregoing, from the viewpoint that dispersibility is excellent, N-methyl-2-pyrrolidone is preferred.

The content of the dispersion medium is not particularly limited and should be in a range in which coatability of the coating solution for positive electrode formation is sufficiently obtained. The content of the dispersion medium with respect to the total mass of the coating solution for positive electrode formation may, for example, be 10 mass% or more and may be 20 mass% or more, 30 mass% or more, or 40 mass% or more. Further, the content of the dispersion medium with respect to the total mass of the coating solution for positive electrode formation may, for example, be 90 mass% or less and may be 80 mass% or less, 70 mass% or less, or 60 mass% or less. That is, the content of the dispersion medium with respect to the total mass of the coating solution for positive electrode formation may, for example, be 10-90 mass%, 10-80 mass%, 10-70 mass%, 10-60 mass%, 20-90 mass%, 20-80 mass%, 20-70 mass%, 20-60 mass%, 30-90 mass%, 30-80 mass%, 30-70 mass%, 30-60 mass%, 40-90 mass%, 40-80 mass%, 40-70 mass%, or 40-60 mass%.

By being coated and dried, the coating solution for positive electrode formation of the present embodiment may form a mixed material layer configured from the positive electrode composition described above. Here, drying indicates an operation in which at least some of the dispersion medium is removed from a coating film obtained by coating the coating solution for positive electrode formation.

The method for coating the coating solution for positive electrode formation of the present embodiment is not particularly limited and may be selected, as appropriate, from publicly-known coating methods (coating means, coating devices). Examples of the coating method include die coating, dip coating, roll coating, doctor coating, knife coating, spray coating, gravure coating, screen printing, and electrostatic coating, etc.

The method for drying the coating film is not particularly limited and may be selected, as appropriate, from publicly-known drying methods (drying means, drying devices). Examples of the drying method include methods in which at least some of the dispersion medium is vaporized by heating and/or depressurizing. The drying method may, for example, be drying by leaving to stand, drying by heating, drying by depressurizing, etc., and may be a drying method which uses a dryer such as a fan dryer, a hot air dryer, an infrared heating dryer, or a far-infrared heating dryer, etc.

The coating solution for positive electrode formation of the present embodiment may, for example, be coated on a current collector and dried. By doing so, a mixed material layer made from the positive electrode composition is formed on the current collector and there is obtained a positive electrode which includes a current collector and a mixed material layer.

The coating solution for positive electrode formation of the present embodiment can be obtained by dispersing each of the components of the positive electrode composition described above in a dispersion medium. The coating solution for positive electrode formation of the present embodiment may, for example, be manufactured by a manufacturing method described below.

### <Method for manufacturing coating solution for positive electrode formation>

The method for manufacturing a coating solution for positive electrode formation may include a mixing step for mixing each of the components in the positive electrode composition described above and a dispersion medium.

The mixing step may be a step in which each component is dispersed in the dispersion medium at the same time or may be step in which mixing is performed after each of the components are dispersed one at a time in the dispersion medium.

The mixing step may, for example, be a step for mixing the active material, a binding material solution containing the binding material, a slurry (A) containing the carbon black (A), a slurry (B) containing the first carbon nanotubes (B), and a slurry (C) containing the second carbon nanotubes (C). Such a mixing step makes it easier to obtain a solution in which each component is uniformly dispersed and makes it possible to suppress breakage of the conductive material due to stirring when being mixed.

The binding material solution contains the binding material and a dispersion medium. The dispersion medium in the binding material solution may be selected, as appropriate, from the dispersion mediums described above. The dispersion medium in the binding material solution may be the same as the dispersion medium in the slurry (A), the slurry (B), and the slurry (C).

The content of the dispersion medium in the binding material solution is not particularly limited and should be of an amount to sufficiently dissolve the binding material. The content of the dispersion medium in the binding material solution with respect to the total mass of the binding material solution may, for example, be 60 mass% or more and may be 70 mass% or more, 80 mass% or more, or 90 mass% or more. Further, the content of the dispersion medium in the binding material solution with respect to the total mass of the binding material solution may, for example, be 99.9 mass% or less and may be 99 mass% or less, 98 mass% or less, or 97 mass% or less. That is, the content of the dispersion medium in the binding material solution with respect to the total mass of the binding material solution may, for example, be 60-99.9 mass%, 60-99 mass%, 60-98 mass%, 60-97 mass%, 70-99.9 mass%, 70-99 mass%, 70-98 mass%, 70-97 mass%, 80-99.9 mass%, 80-99 mass%, 80-98 mass%, 80-97 mass%, 90-99.9 mass%, 90-99 mass%, 90-98 mass%, or 90-97 mass%.

The slurry (A) includes the carbon black (A) and a dispersion medium. The slurry (A) may further include a dispersing agent. The dispersion medium in the slurry (A) may be selected, as appropriate, from the dispersion mediums described above. The dispersion medium in the slurry (A) may be the same as the dispersion medium in the binding material solution, the slurry (B), and the slurry (C).

The content of the dispersion medium in the slurry (A) is not particularly limited and should be of an amount to sufficiently disperse the carbon black (A). The content of the dispersion medium in the slurry (A) with respect to the total mass of the slurry (A) may, for example, be 60 mass% or more and may be 70 mass% or more, 80 mass% or more, or 90 mass% or more. Further, the content of the dispersion medium in the slurry (A) with respect to the total mass of the slurry (A) may, for example, be 99.9 mass% or less and may be 99 mass% or less, 98 mass% or less, or 97 mass% or less. That is, the content of the dispersion medium in the slurry (A) with respect to the total mass of the slurry (A) may, for example, be 60-99.9 mass%, 60-99 mass%, 60-98 mass%, 60-97 mass%, 70-99.9 mass%, 70-99 mass%, 70-98 mass%, 70-97 mass%, 80-99.9 mass%, 80-99 mass%, 80-98 mass%, 80-97 mass%, 90-99.9 mass%, 90-99 mass%, 90-98 mass%, or 90-97 mass%.

When the slurry (A) contains a dispersing agent, the content of the dispersing agent may, for example, be 5 parts by mass or more with respect to 100 parts by mass of the carbon black (A), and may be 10 parts by mass or more, 15 parts by mass or more, or 20 parts by mass or more. Further, the content of the dispersing agent with respect to 100 parts by mass of the carbon black (A) may, for example, be 100 parts by mass or less and may be 90 parts by mass or less, 80 parts by mass or less, or 70 parts by mass or less. That is, when the slurry (A) contains a dispersing agent, the content of the dispersing agent with respect to 100 parts by mass of the carbon black (A) may, for example, be 5-100 parts by mass, 5-90 parts by mass, 5-80 parts by mass, 5-70 parts by mass, 10-100 parts by mass, 10-90 parts by mass, 10-80 parts by mass, 10-70 parts by mass, 15-100 parts by mass, 15-90 parts by mass, 15-80 parts by mass, 15-70 parts by mass, 20-100 parts by mass, 20-90 parts by mass, 20-80 parts by mass, or 20-70 parts by mass.

The slurry (B) includes the first carbon nanotubes (B) and a dispersion medium. The slurry (B) may further include a dispersing agent. The dispersion medium in the slurry (B) may be selected, as appropriate, from the dispersion mediums described above. The dispersion medium in the slurry (B) may be the same as the dispersion medium in the binding material solution, the slurry (A), and the slurry (C).

The content of the dispersion medium in the slurry (B) is not particularly limited and should be of an amount to sufficiently disperse the first carbon nanotubes (B). The content of the dispersion medium in the slurry (B) with respect to the total mass of the slurry (B) may, for example, be 60 mass% or more and may be 70 mass% or more, 80 mass% or more, or 90 mass% or more. Further, the content of the dispersion medium in the slurry (B) with respect to the total mass of the slurry (B) may, for example, be 99.9 mass% or less and may be 99 mass% or less, 98 mass% or less, or 97 mass% or less. That is, the content of the dispersion medium in the slurry (B) with respect to the total mass of the slurry (B) may, for example, be 60-99.9 mass%, 60-99 mass%, 60-98 mass%, 60-97 mass%, 70-99.9 mass%, 70-99 mass%, 70-98 mass%, 70-97 mass%, 80-99.9 mass%, 80-99 mass%, 80-98 mass%, 80-97 mass%, 90-99.9 mass%, 90-99 mass%, 90-98 mass%, or 90-97 mass%.

When the slurry (B) contains a dispersing agent, the content of the dispersing agent may, for example, be 5 parts by mass or more with respect to 100 parts by mass of the first carbon nanotubes (B), and may be 10 parts by mass or more, 15 parts by mass or more, or 20 parts by mass or more. Further, the content of the dispersing agent with respect to 100 parts by mass of the first carbon nanotubes (B) may, for example, be 100 parts by mass or less and may be 90 parts by mass or less, 80 parts by mass or less, or 70 parts by mass or less. That is, when the slurry (B) contains a dispersing agent, the content of the dispersing agent with respect to 100 parts by mass of the first carbon nanotubes (B) may, for example, be 5-100 parts by mass, 5-90 parts by mass, 5-80 parts by mass, 5-70 parts by mass, 10-100 parts by mass, 10-90 parts by mass, 10-80 parts by mass, 10-70 parts by mass, 15-100 parts by mass, 15-90 parts by mass, 15-80 parts by mass, 15-70 parts by mass, 20-100 parts by mass, 20-90 parts by mass, 20-80 parts by mass, or 20-70 parts by mass.

The slurry (C) includes the second carbon nanotubes (C) and a dispersion medium. The slurry (C) may further include a dispersing agent. The dispersion medium in the slurry (C) may be selected, as appropriate, from the dispersion mediums described above. The dispersion medium in the slurry (C) may be the same as the dispersion medium in the binding material solution, the slurry (A), and the slurry (B).

The content of the dispersion medium in the slurry (C) is not particularly limited and should be of an amount to sufficiently disperse the second carbon nanotubes (C). The content of the dispersion medium in the slurry (C) with respect to the total mass of the slurry (C) may, for example, be 60 mass% or more and may be 70 mass% or more, 80 mass% or more, or 90 mass% or more. Further, the content of the dispersion medium in the slurry (C) with respect to the total mass of the slurry (C) may, for example, be 99.9 mass% or less and may be 99 mass% or less, 98 mass% or less, or 97 mass% or less. That is, the content of the dispersion medium in the slurry (C) with respect to the total mass of the slurry (C) may, for example, be 60-99.9 mass%, 60-99 mass%, 60-98 mass%, 60-97 mass%, 70-99.9 mass%, 70-99 mass%, 70-98 mass%, 70-97 mass%, 80-99.9 mass%, 80-99 mass%, 80-98 mass%, 80-97 mass%, 90-99.9 mass%, 90-99 mass%, 90-98 mass%, or 90-97 mass%.

When the slurry (C) contains a dispersing agent, the content of the dispersing agent may, for example, be 5 parts by mass or more with respect to 100 parts by mass of the second carbon nanotubes (C), and may be 10 parts by mass or more, 15 parts by mass or more, or 20 parts by mass or more. Further, the content of the dispersing agent with respect to 100 parts by mass of the second carbon nanotubes (C) may, for example, be 100 parts by mass or less and may be 90 parts by mass or less, 80 parts by mass or less, or 70 parts by mass or less. That is, when the slurry (C) contains a dispersing agent, the content of the dispersing agent with respect to 100 parts by mass of the second carbon nanotubes (C) may, for example, be 5-100 parts by mass, 5-90 parts by mass, 5-80 parts by mass, 5-70 parts by mass, 10-100 parts by mass, 10-90 parts by mass, 10-80 parts by mass, 10-70 parts by mass, 15-100 parts by mass, 15-90 parts by mass, 15-80 parts by mass, 15-70 parts by mass, 20-100 parts by mass, 20-90 parts by mass, 20-80 parts by mass, or 20-70 parts by mass.

The mixing method in the mixing step is not particularly limited and may be selected, as appropriate, from publicly-known mixing methods (mixing means, mixing devices).

### (Positive electrode)

The positive electrode of the present embodiment includes the positive electrode composition described above. The positive electrode of the present embodiment may, for example, include: a mixed material layer configured from the positive electrode composition; and a current collector. The mixed material layer may be disposed (laminated) on the current collector.

The current collector is not particularly limited and it is possible to use, without any particular limitations, a publicly-known current collector. For example, a metal foil (metals such as gold, silver, copper, platinum, aluminum, iron, nickel, chromium, manganese, lead, tungsten, and titanium, etc., or an alloy having any of the foregoing metals as a main component) may be used as the current collector. A current collector is generally provided in the form of a foil but is not limited thereto, and it is also possible to use perforated foil and mesh-type current collectors.

The mixed material layer may include the positive electrode composition described above and may be configured from the positive electrode composition described above.

The thickness of the mixed material layer may, for example, be 20 µm or more, and from the viewpoint that conductivity further improves, may be 30 µm or more, 40 µm or more, or 50 µm or more. Further, the thickness of the mixed material layer may, for example, be 100 µm or less, and from the viewpoint that conductivity further improves, may be 90 µm or less, 80 µm or less, or 70 µm or less. That is, the thickness of the mixed material layer may, for example, be 20-100 µm, 20-90 µm, 20-80 µm, 20-70 µm, 30-100 µm, 30-90 µm, 30-80 µm, 30-70 µm, 40-100 µm, 40-90 µm, 40-80 µm, 40-70 µm, 50-100 µm, 50-90 µm, 50-80 µm, or 50-70 µm.

The positive electrode composition of the present embodiment may be manufactured, for example, by a manufacturing method (method for manufacturing a positive electrode) including a mixed material layer formation step in which the coating solution for positive electrode formation described above is coated on a current collector and dried to form a mixed material layer on the current collector.

The method for manufacturing a positive electrode may further include a pressurization step in which the mixed material layer formed in the mixed material layer formation step and the current collector are pressurized in the lamination direction. The pressurization method in the pressurization step is not particularly limited and may, for example, be a roll press, mold press, or calendar press method, etc.

The method for manufacturing a positive electrode may further include a drying step in which moisture is removed from the mixed material layer after the pressurization step. In the drying step, residual moisture in the mixed material layer may, for example, be removed by vacuum-drying.

The positive electrode of the present embodiment can be preferably used as a positive electrode of a battery, in particular as a positive electrode of a secondary battery (for example, a lithium-ion secondary battery).

### (Battery)

The battery of the present embodiment includes the positive electrode described above. The battery of the present embodiment may be a secondary battery and may be a lithium-ion secondary battery. The battery of the present embodiment includes the positive electrode described above, and therefore, tends to have excellent cycle characteristics.

Other than the positive electrode, the battery of the present embodiment may have the same configuration as that of a publicly-known battery. The method for manufacturing the battery of the present embodiment is also not particularly limited and, other than using the positive electrode described above, the battery may be manufactured by a publicly-known method for manufacturing a battery.

The battery of the present embodiment may, for example, include the positive electrode described above, a negative electrode and a separator.

The separator is not particularly limited and it is, for example, possible to use, without any particular limitations, a separator that is publicly-known as a separator for lithium-ion secondary batteries. Examples of the separator include synthetic resins such as polyethylene and polypropylene, etc. The separator is preferably a porous film since porous films have good electrolyte retention properties.

The negative electrode is not particularly limited and it is, for example, possible to use, without any particular limitations, a negative electrode that is publicly-known as a negative electrode for lithium-ion secondary batteries. The negative electrode may, for example, include: a negative electrode mixed material layer including a negative electrode active material and a binding material; and a negative electrode current collector.

The battery of the present embodiment may, for example, include an electrode group in which the positive electrode and the negative electrode are laminated with a separator interposed therebetween or wound around each of the positive electrode and the negative electrode.

In the battery of the present embodiment the positive electrode, the negative electrode and the separator may, for example, be immersed in an electrolyte.

The electrolyte is not particularly limited and may, for example, be a non-aqueous electrolyte which includes a lithium salt. Examples of a non-aqueous solvent in a non-aqueous electrolyte which includes a lithium salt include ethylene carbonate, propylene carbonate, diethyl carbonate, dimethyl carbonate, and ethyl methyl carbonate, etc. Further, examples of a lithium salt which can dissolve in a non-aqueous solvent include lithium hexafluorophosphate, lithium tetrafluoroborate, and lithium trifluoromethanesulfonate, etc. Further, the battery of the present embodiment may use an ion-conducting polymer, etc., as the electrolyte.

Uses of the battery of the present embodiment are not particularly limited. For example, the battery can be used in wide range of fields such as: portable audiovisual devices including digital cameras, video cameras, portable audio players, and liquid crystal televisions, etc.; portable information terminals including laptop computers, smartphones, and mobile PCs, etc.; and also portable game devices, power tools, electric bicycles, hybrid vehicles, electric vehicles, and power storage systems, etc.

Preferred embodiments of the present disclosure were described above, but the present disclosure is not limited to the above embodiments.

### (Conductive material, slurry)

One aspect of the present disclosure, for example, relates to a conductive material which includes the carbon black (A), the first carbon nanotubes (B), and the second carbon nanotubes (C). Further, one aspect of the present disclosure relates to a slurry which includes the conductive material and a dispersion medium. Due to such a conductive material and slurry, it is easy to obtain the positive electrode composition described above.

Examples of the dispersion medium in the slurry include the same dispersion mediums as those in the coating solution for positive electrode formation described above.

The content of the dispersion medium in the slurry is not particularly limited and should be of an amount to sufficiently disperse the conductive material. The content of the dispersion medium in the slurry with respect to the total mass of the slurry may, for example, be 60 mass% or more and may be 70 mass% or more, 80 mass% or more, or 90 mass% or more. Further, the content of the dispersion medium in the slurry with respect to the total mass of the slurry (C) may, for example, be 99.9 mass% or less and may be 99 mass% or less, 98 mass% or less, or 97 mass% or less. That is, the content of the dispersion medium in the slurry with respect to the total mass of the slurry may, for example, be 60-99.9 mass%, 60-99 mass%, 60-98 mass%, 60-97 mass%, 70-99.9 mass%, 70-99 mass%, 70-98 mass%, 70-97 mass%, 80-99.9 mass%, 80-99 mass%, 80-98 mass%, 80-97 mass%, 90-99.9 mass%, 90-99 mass%, 90-98 mass%, or 90-97 mass%.

The slurry may further contain a dispersing agent. When the slurry contains a dispersing agent, the content of the dispersing agent with respect to 100 parts by mass of the conductive material may, for example, be 5 parts by mass or more and may be 10 parts by mass or more, 15 parts by mass or more, or 20 parts by mass or more. Further, the content of the dispersing agent with respect to 100 parts by mass of the conductive material may, for example, be 100 parts by mass or less and may be 90 parts by mass or less, 80 parts by mass or less, or 70 parts by mass or less. That is, when the slurry contains a dispersing agent, the content of the dispersing agent with respect to 100 parts by mass of the conductive material may, for example, be 5-100 parts by mass, 5-90 parts by mass, 5-80 parts by mass, 5-70 parts by mass, 10-100 parts by mass, 10-90 parts by mass, 10-80 parts by mass, 10-70 parts by mass, 15-100 parts by mass, 15-90 parts by mass, 15-80 parts by mass, 15-70 parts by mass, 20-100 parts by mass, 20-90 parts by mass, 20-80 parts by mass, or 20-70 parts by mass.

The slurry may further include a component other than the conductive material and the dispersing agent. Examples of the other component include wetting agents and defoaming agents, etc.

The conductive material and the slurry may, for example, be used in the manufacture of the coating solution for positive electrode formation described above. Further, the conductive material and the slurry may be used in uses such as a coating solution for negative electrode formation and a coating solution for a carbon-coated current collector, etc.

### EXAMPLES

Hereinafter, one embodiment of the present disclosure is explained in further detail using examples, but the present disclosure is not limited to the examples below.

### (Preparation of carbon black)

Carbon blacks (A-1) to (A-3) and (X-1) to (X-3) shown in Table 1 were prepared. Note that in the table, AB indicates acetylene black, FB indicates furnace black, and KB indicates ketjen black.

**TABLE 1**

| | A-1 | A-2 | A-3 | X-1 | X-2 | X-3 |
|---|---|---|---|---|---|---|
| AVERAGE PRIMARY PARTICLE DIAMETER (nm) | 19 | 18 | 23 | 35 | 13 | 40 |
| BET SPECIFIC SURFACE AREA (m²/g) | 301 | 860 | 141 | 63 | 560 | 800 |
| CARBON BLACK TYPE | AB | AB | AB | FB | FB | KB |

### (Preparation of carbon nanotubes)

Carbon nanotubes (B-1) to (B-4) shown in Table 2 were prepared. Further, carbon nanotubes (C-1) shown in Table 3 were prepared. Note that in the tables, MWCNT indicates multi-walled carbon nanotubes and SWCNT indicates single-walled carbon nanotubes.

**TABLE 2**

| | B-1 | B-2 | B-3 | B-4 |
|---|---|---|---|---|
| AVERAGE DIAMETER (nm) | 6 | 9 | 3 | 12 |
| PEAK RATIO (D/G) | 0.72 | 0.75 | 0.28 | 1.42 |
| LAYER STRUCTURE | MWCNT | MWCNT | MWCNT | MWCNT |

**TABLE 3**

| | C-1 |
|---|---|
| AVERAGE DIAMETER (nm) | 0.9 |
| PEAK RATIO (D/G) | 0.07 |
| LAYER STRUCTURE | SWCNT |

### (Preparation of carbon black slurry)

N-methyl-2-pyrrolidone (hereinafter NMP) was prepared as a dispersion medium and a polyvinyl alcohol (Poval B05 manufactured by Denka Co., Ltd.) was prepared as a dispersing agent. A slurry was obtained by adding 1.0 mass% of the polyvinyl alcohol and 10.0 mass% of the carbon black (one of the carbon blacks (A-1) to (A-3) and (X-1) to (X-3) in Table 1) to 89.0 mass% of the NMP and stirring for 120 minutes using a planetary mixer (Hivis Disper Mix Model 3D-5 manufactured by Primix Corporation). Next, the obtained slurry was put into a bead mill (Mugen Flow MGF 2-ZA manufactured by Ashizawa Finetech Ltd.) loaded with zirconia beads (diameter 0.5 mm) and a dispersion process was performed. After performing the dispersion process, the zirconia beads were removed by filtering and a carbon black slurry was produced.

### (Preparation of carbon nanotube slurry)

N-methyl-2-pyrrolidone (hereinafter NMP) was prepared as a dispersion medium and a polyvinyl alcohol (Poval B05 manufactured by Denka Co., Ltd.) was prepared as a dispersing agent. A slurry was obtained by adding 0.4 mass% of the polyvinyl alcohol and 0.4 mass% of the carbon nanotubes (one of the carbon nanotubes (B-1) to (B-4) in Table 2 and the carbon nanotubes (C-1) in Table 3) to 99.2 mass% of the NMP and stirring for 120 minutes using a planetary mixer (Hivis Disper Mix Model 3D-5 manufactured by Primix Corporation). Next, the obtained slurry was put into a bead mill (Mugen Flow MGF 2-ZA manufactured by Ashizawa Finetech Ltd.) loaded with zirconia beads (diameter 0.5 mm) and a dispersion process was performed. After performing the dispersion process, the zirconia beads were removed by filtering and a carbon nanotube slurry was produced.

### <Example 1-1>

### (1) Preparation of coating solution for positive electrode formation

A carbon black (A-1) slurry, a carbon nanotube (B-1) slurry, and a carbon nanotube (C-1) slurry were prepared using the methods described above. Further: lithium nickel manganese cobalt oxide ("ME6E" manufactured by Beijing Easpring Material Technology Co., Ltd) having an average particle diameter D₅₀ of 10 µm was prepared as an active material; a polyvinylidene fluoride NMP solution ("Solef 5130" manufactured by Solvay) was prepared as a binding material; and NMP was prepared as a dispersion medium. The amount of each raw material was adjusted so that, in terms of solid ratio conversion, the active material was 97.55 mass%, the conductive material was 1.0 mass% (carbon black (A-1): 0.7 mass%; carbon nanotubes (B-1): 0.25 mass%; and carbon nanotubes (C-1): 0.05 mass%), the binding material was 1.3 mass%, and the dispersing agent was 0.15 mass%. The NMP was added until a coatable viscosity was achieved, and a planetary centrifugal mixer (Awatori Rentaro ARV-310, manufactured by Thinky Corporation) was used to mix until uniform to obtain a coating solution for positive electrode formation.

### (2) Manufacture of positive electrode

An applicator was used to form a film of the coating solution for positive electrode formation prepared in (1) above on one surface of an aluminum foil (manufactured by UACJ Corporation) having a thickness of 15 µm to produce a laminated body. The laminated body was placed in a dryer and pre-dried at 105°C for one hour to completely remove the NMP. The laminated body after being dried was then pressed at a linear pressure of 200 kg/cm using a roll press so that the overall thickness of the laminated body became 80 µm. Next, vacuum-drying at 170°C was performed for three hours to completely remove the residual moisture and obtain a positive electrode including a current collector and a mixed material layer.

### (3) Manufacture of negative electrode

The following were prepared: as a solvent, pure water (manufactured by Kanto Kagaku); as a negative electrode active material, artificial graphite ("MAG-D", manufactured by Hitachi Chemical Company, Ltd.); as a binding material, styrene-butadiene rubber (hereinafter SBR) ("BM-400B", manufactured by Zeon Corporation); and as a dispersing agent, carboxymethylcellulose (hereinafter CMC) ("D2200", manufactured by Daicel Corporation). Next, the CMC and the artificial graphite were weighed so as to be, respectively, 1 mass% by solid content and 97 mass% by solid content and mixed. Pure water was added to the mixture and a planetary centrifugal mixer (Awatori Rentaro ARV-310 manufactured by Thinky Corporation) was used to mix until uniform to obtain a mixture. Next, the SBR was weighed so as to be 2 mass% by solid content, added to the obtained mixture, and a planetary centrifugal mixer (Awatori Rentaro ARV-310 manufactured by Thinky Corporation) was used to mix until uniform to obtain a coating solution for negative electrode formation. Next, an applicator was used to coat the coating solution for negative electrode formation on a copper foil (manufactured by UACJ Corporation) having a thickness of 10 µm to produce a laminated body. The laminated body was placed in a dryer and pre-dried at 60°C for one hour. The laminated body was then pressed at a linear pressure of 50 kg/cm using a roll press so that the overall thickness of the laminated body became 60 µm. Next, vacuum-drying at 120°C was performed for three hours to completely remove the residual moisture and obtain a negative electrode including a current collector and a mixed material layer.

### (4) Manufacture of battery

In a dry room controlled so as to be at the dew point -50°C or less, the positive electrode was processed to 40×40 mm and the negative electrode was processed to 44×44 mm. Then an aluminum tab was welded to the positive electrode and a nickel tab was welded to the negative electrode. Respective mixed material coating surfaces of the positive electrode and the negative electrode were set so as to face one another at the center, and a polyolefin microporous film processed to 45×45 mm was disposed between the positive electrode and the negative electrode. Next, a sheet-type exterior cover cut and processed so as to have sides of 70×140 mm was folded in two at a central section of the longer sides. Next, a laminated body including the positive electrode/polyolefin microporous film/negative electrode was sandwiched by the folded-in-two exterior cover with the exterior cover being arranged so that the positive electrode aluminum tab and the negative electrode nickel tab were exposed to the outside of the exterior cover. Next, a heat sealer was used to thermally fuse two sides of the exterior cover including a side where the positive electrode aluminum tab and the negative electrode nickel tab were exposed. Then, from a non-thermally-fused side, 2 g of electrolyte (solution manufactured by Kishida Chemical Co., Ltd., and including: ethylene carbonate/diethyl carbonate=1/2 (volume ratio); and a 1M LiPF₆ solution) was injected and after allowing the electrolyte to become sufficiently soaked into the positive electrode, the negative electrode, and the polyolefin microporous film, a vacuum heat sealer was used to thermally fuse the remaining side of the exterior cover while depressurizing the inside thereof to obtain a lithium-ion secondary battery.

### (5) Evaluation of battery

### (5-1) Evaluation of internal resistance

The battery that was produced underwent constant current, constant voltage charging limited to 4.3 V and 0.2 C at 25°C, and was then discharged to 3.0 V at a 0.2 C constant current. Next, after performing five cycles of charging/discharging under the same conditions, the battery was charged to a charging depth of 50%. Thereafter, an impedance measurement was performed in a frequency range of 1.5 MHz to 0.01 Hz and a vibration voltage of 5 mV, and the internal resistance was measured. The results are shown in Table 4.

### (5-2) Evaluation of cycle characteristics

The battery that was produced underwent constant current, constant voltage charging limited to 4.3 V and 1 C at 25°C, and was then discharged to 3.0 V at a 1 C constant current. 500 cycles of the above charging and discharging were repeated and the discharge capacity in each cycle was measured. As an index for the cycle characteristics of the battery, a capacity maintenance rate after 500 cycles with respect to a capacity maintenance rate after one cycle was calculated as a cycle capacity maintenance rate. The results are shown in Table 4.

### <Example 1-2>

Other than changing the content ratio of the carbon black (A-1), the carbon nanotubes (B-1), and the carbon nanotubes (C-1) from 70:25:5 to 65:20:15, the manufacture of the coating solution for positive electrode formation, the manufacture of the positive electrode, the manufacture of the negative electrode, the manufacture of the battery, and the evaluation of the battery were performed in the same manner as in Example 1-1. The results are shown in Table 4.

### <Example 1-3>

Other than changing the content ratio of the carbon black (A-1), the carbon nanotubes (B-1), and the carbon nanotubes (C-1) from 70:25:5 to 40:30:30, the manufacture of the coating solution for positive electrode formation, the manufacture of the positive electrode, the manufacture of the negative electrode, the manufacture of the battery, and the evaluation of the battery were performed in the same manner as in Example 1-1. The results are shown in Table 4.

### <Example 1-4>

Other than changing the content ratio of the carbon black (A-1), the carbon nanotubes (B-1), and the carbon nanotubes (C-1) from 70:25:5 to 80:17:3, the manufacture of the coating solution for positive electrode formation, the manufacture of the positive electrode, the manufacture of the negative electrode, the manufacture of the battery, and the evaluation of the battery were performed in the same manner as in Example 1-1. The results are shown in Table 4.

### <Comparative Example 1-1>

Other than using only the carbon black (A-1) as the conductive material, the manufacture of the coating solution for positive electrode formation, the manufacture of the positive electrode, the manufacture of the negative electrode, the manufacture of the battery, and the evaluation of the battery were performed in the same manner as in Example 1-1. The results are shown in Table 5.

### <Comparative Example 1-2>

Other than using only the carbon nanotubes (B-1) as the conductive material, the manufacture of the coating solution for positive electrode formation, the manufacture of the positive electrode, the manufacture of the negative electrode, the manufacture of the battery, and the evaluation of the battery were performed in the same manner as in Example 1-1. The results are shown in Table 5.

### <Comparative Example 1-3>

Other than not using the carbon nanotubes (C-1) and changing the content ratio of the carbon black (A-1), the carbon nanotubes (B-1), and the carbon nanotubes (C-1) from 70:25:5 to 70:30:0, the manufacture of the coating solution for positive electrode formation, the manufacture of the positive electrode, the manufacture of the negative electrode, the manufacture of the battery, and the evaluation of the battery were performed in the same manner as in Example 1-1. The results are shown in Table 5.

### <Comparative Example 1-4>

Other than not using the carbon nanotubes (B-1) and changing the content ratio of the carbon black (A-1), the carbon nanotubes (B-1), and the carbon nanotubes (C-1) from 70:25:5 to 70:0:30, the manufacture of the coating solution for positive electrode formation, the manufacture of the positive electrode, the manufacture of the negative electrode, the manufacture of the battery, and the evaluation of the battery were performed in the same manner as in Example 1-1. The results are shown in Table 5.

### <Comparative Example 1-5>

Other than not using the carbon black (A-1) and changing the content ratio of the carbon black (A-1), the carbon nanotubes (B-1), and the carbon nanotubes (C-1) from 70:25:5 to 0:95:5, the manufacture of the coating solution for positive electrode formation, the manufacture of the positive electrode, the manufacture of the negative electrode, the manufacture of the battery, and the evaluation of the battery were performed in the same manner as in Example 1-1. The results are shown in Table 5.

**TABLE 4**

| | | EXAMPLE 1-1 | EXAMPLE 1-2 | EXAMPLE 1-3 | EXAMPLE 1-4 |
|---|---|---|---|---|---|
| CB (A) | TYPE | A-1 | A-1 | A-1 | A-1 |
| | PRIMARY PARTICLE DIAMETER (nm) | 19 | 19 | 19 | 19 |
| CNT (B) | TYPE | B-1 | B-1 | B-1 | B-1 |
| | AVERAGE DIAMETER (nm) | 6 | 6 | 6 | 6 |
| CNT (C) | TYPE | C-1 | C-1 | C-1 | C-1 |
| | AVERAGE DIAMETER (nm) | 0.9 | 0.9 | 0.9 | 0.9 |
| (A)/(B)/(C) | | 70/25/5 | 65/20/15 | 40/30/30 | 80/17/3 |
| INTERNAL RESISTANCE (Ω) | | 1.14 | 1.08 | 1.02 | 1.22 |
| CYCLE CAPACITY MAINTENANCE RATE (%) | | 94.9 | 95.2 | 95.7 | 92.5 |

**TABLE 5**

| | | COMP EX 1-1 | COMP EX 1-2 | COMP EX 1-3 | COMP EX 1-4 | COMP EX 1-5 |
|---|---|---|---|---|---|---|
| CB (A) | TYPE | A-1 | - | A-1 | A-1 | - |
| | PRIMARY PARTICLE DIAMETER (nm) | 19 | - | 19 | 19 | - |
| CNT (B) | TYPE | - | B-1 | B-1 | - | B-1 |
| | AVERAGE DIAMETER (nm) | - | 6 | 6 | - | 6 |
| CNT (C) | TYPE | - | - | - | C-1 | C-1 |
| | AVERAGE DIAMETER (nm) | - | - | - | 0.9 | 0.9 |
| (A)/(B)/(C) | | 100/0/0 | 0/100/0 | 70/30/0 | 70/0/30 | 0/95/5 |
| INTERNAL RESISTANCE (Ω) | | 1.75 | 1.64 | 1.59 | 1.61 | 1.62 |
| CYCLE CAPACITY MAINTENANCE RATE (%) | | 84.4 | 85.7 | 87.8 | 86.5 | 86.9 |

### <Example 2-1>

Other than changing the carbon black (A-1) to the carbon black (A-2), the manufacture of the coating solution for positive electrode formation, the manufacture of the positive electrode, the manufacture of the negative electrode, the manufacture of the battery, and the evaluation of the battery were performed in the same manner as in Example 1-1. The results are shown in Table 6.

### <Example 2-2>

Other than changing the carbon black (A-1) to the carbon black (A-3) and setting the content ratio of the carbon black (A-3), the carbon nanotubes (B-1), and the carbon nanotubes (C-1) so as to be 45:30:25, the manufacture of the coating solution for positive electrode formation, the manufacture of the positive electrode, the manufacture of the negative electrode, the manufacture of the battery, and the evaluation of the battery were performed in the same manner as in Example 1-1. The results are shown in Table 6.

### <Comparative Example 2-1>

Other than changing the carbon black (A-1) to the carbon black (X-1), the manufacture of the coating solution for positive electrode formation, the manufacture of the positive electrode, the manufacture of the negative electrode, the manufacture of the battery, and the evaluation of the battery were performed in the same manner as in Example 1-1. The results are shown in Table 7.

### <Comparative Example 2-2>

Other than changing the carbon black (A-1) to the carbon black (X-2), the manufacture of the coating solution for positive electrode formation, the manufacture of the positive electrode, the manufacture of the negative electrode, the manufacture of the battery, and the evaluation of the battery were performed in the same manner as in Example 1-1. The results are shown in Table 7.

### <Comparative Example 2-3>

Other than changing the carbon black (A-1) to the carbon black (X-3), the manufacture of the coating solution for positive electrode formation, the manufacture of the positive electrode, the manufacture of the negative electrode, the manufacture of the battery, and the evaluation of the battery were performed in the same manner as in Example 1-1. The results are shown in Table 7.

**TABLE 6**

| | | EXAMPLE 1-1 | EXAMPLE 2-1 | EXAMPLE 2-2 |
|---|---|---|---|---|
| CB (A) | TYPE | A-1 | A-2 | A-3 |
| | PRIMARY PARTICLE DIAMETER (nm) | 19 | 18 | 23 |
| CNT (B) | TYPE | B-1 | B-1 | B-1 |
| | AVERAGE DIAMETER (nm) | 6 | 6 | 6 |
| CNT (C) | TYPE | C-1 | C-1 | C-1 |
| | AVERAGE DIAMETER (nm) | 0.9 | 0.9 | 0.9 |
| (A)/(B)/(C) | | 70/25/5 | 70/25/5 | 45/30/25 |
| INTERNAL RESISTANCE (Ω) | | 1.14 | 1.05 | 1.25 |
| CYCLE CAPACITY MAINTENANCE RATE (%) | 94.9 | 96.1 | 91.2 | |

**TABLE 7**

| | | COMP EX 2-1 | COMP EX 2-2 | COMP EX 2-3 |
|---|---|---|---|---|
| CB (A) | TYPE | X-1 | X-2 | X-3 |
| | PRIMARY PARTICLE DIAMETER (nm) | 35 | 13 | 40 |
| CNT (B) | TYPE | B-1 | B-1 | B-1 |
| | AVERAGE DIAMETER (nm) | 6 | 6 | 6 |
| CNT (C) | TYPE | C-1 | C-1 | C-1 |
| | AVERAGE DIAMETER (nm) | 0.9 | 0.9 | 0.9 |
| (A)/(B)/(C) | | 70/25/5 | 70/25/5 | 70/25/5 |
| INTERNAL RESISTANCE (Ω) | | 2.28 | 1.84 | 1.51 |
| CYCLE CAPACITY MAINTENANCE RATE (%) | | 80.1 | 86.1 | 87.8 |

### <Example 3-1>

Other than changing the carbon nanotubes (B-1) to the carbon nanotubes (B-2), the manufacture of the coating solution for positive electrode formation, the manufacture of the positive electrode, the manufacture of the negative electrode, the manufacture of the battery, and the evaluation of the battery were performed in the same manner as in Example 1-1. The results are shown in Table 8.

### <Example 3-2>

Other than changing the carbon nanotubes (B-1) to the carbon nanotubes (B-3), the manufacture of the coating solution for positive electrode formation, the manufacture of the positive electrode, the manufacture of the negative electrode, the manufacture of the battery, and the evaluation of the battery were performed in the same manner as in Example 1-1. The results are shown in Table 8.

### <Example 3-3>

Other than changing the carbon nanotubes (B-1) to the carbon nanotubes (B-4), the manufacture of the coating solution for positive electrode formation, the manufacture of the positive electrode, the manufacture of the negative electrode, the manufacture of the battery, and the evaluation of the battery were performed in the same manner as in Example 1-1. The results are shown in Table 9.

### <Comparative Example 3-1>

Other than changing the carbon nanotubes (B-1) to the carbon nanotubes (B-4), not using the carbon nanotubes (C-1), and changing the content ratio of the carbon black (A-1) and the carbon nanotubes (B-4) to 70:30, the manufacture of the coating solution for positive electrode formation, the manufacture of the positive electrode, the manufacture of the negative electrode, the manufacture of the battery, and the evaluation of the battery were performed in the same manner as in Example 1-1. The results are shown in Table 9.

**TABLE 8**

| | | EXAMPLE 1-1 | EXAMPLE 3-1 | EXAMPLE 3-2 |
|---|---|---|---|---|
| CB (A) | TYPE | A-1 | A-1 | A-1 |
| | PRIMARY PARTICLE DIAMETER (nm) | 19 | 19 | 19 |
| CNT (B) | TYPE | B-1 | B-2 | B-3 |
| | AVERAGE DIAMETER (nm) | 6 | 9 | 3 |
| CNT (C) | TYPE | C-1 | C-1 | C-1 |
| | AVERAGE DIAMETER (nm) | 0.9 | 0.9 | 0.9 |
| (A)/(B)/(C) | | 70/25/5 | 70/25/5 | 70/25/5 |
| INTERNAL RESISTANCE (Ω) | | 1.14 | 1.31 | 1.52 |
| CYCLE CAPACITY MAINTENANCE RATE (%) | | 94.9 | 92.7 | 88.3 |

**TABLE 9**

| | | EXAMPLE 3-3 | COMP EX 3-1 |
|---|---|---|---|
| CB (A) | TYPE | A-1 | A-1 |
| | PRIMARY PARTICLE DIAMETER (nm) | 19 | 19 |
| CNT (B) | TYPE | B-4 | B-4 |
| | AVERAGE DIAMETER (nm) | 12 | 12 |
| CNT (C) | TYPE | C-1 | - |
| | AVERAGE DIAMETER (nm) | 0.9 | - |
| (A)/(B)/(C) | | 70/25/5 | 70/30/5 |
| INTERNAL RESISTANCE (Ω) | | 1.53 | 1.75 |
| CYCLE CAPACITY MAINTENANCE RATE (%) | | 87.4 | 81.2 |

Note that in Tables 4 to 9, "Primary particle diameter (nm)" indicates the average primary particle diameter (nm) of the carbon black. Further, "(A)/(B)/(C)" indicates the ratio of the masses of the carbon black (A), the first carbon nanotubes (B), and the second carbon nanotubes (C).

From the above results, it was confirmed that batteries manufactured using the positive electrode composition according to the embodiment described above have low internal resistance and excellent cycle characteristics.

## Claims

1. A positive electrode composition comprising an active material, a binding material, and a conductive material,
wherein the conductive material comprises:
carbon black (A) having an average primary particle diameter of 17 nm or more and 30 nm or less;
first carbon nanotubes (B) having an average diameter of 2 nm or more and 15 nm or less; and
second carbon nanotubes (C) having an average diameter of 0.5 nm or more and less than 2 nm.

2. The positive electrode composition according to claim 1, wherein the carbon black (A) is selected from the group consisting of furnace black, acetylene black, and ketjen black.

3. The positive electrode composition according to claim 1, wherein the carbon black (A) has a BET specific surface area of 100 m²/g or more and 900 m²/g or less.

4. The positive electrode composition according to claim 1, wherein the content of the carbon black (A) is 30 mass% or more and 90 mass% or less with respect to the total mass of the conductive material.

5. The positive electrode composition according to claim 1, wherein the first carbon nanotubes (B) have a peak ratio (D/G) of a D-band to a G-band of 0.1 or more and 1.5 or less in a Raman spectrum.

6. The positive electrode composition according to claim 1, wherein the first carbon nanotubes (B) have a peak ratio (D/G) of a D-band to a G-band of 0.3 or more and 1.4 or less in a Raman spectrum.

7. The positive electrode composition according to claim 1, wherein the content of the first carbon nanotubes (B) is 5 mass% or more and 50 mass% or less with respect to the total mass of the conductive material.

8. The positive electrode composition according to claim 1, wherein the content of the second carbon nanotubes (C) is 1 mass% or more and 45 mass% or less with respect to the total mass of the conductive material.

9. A coating solution for positive electrode formation, the coating solution comprising the positive electrode composition according to any one of claims 1 to 8 and a dispersion medium.

10. A positive electrode comprising the positive electrode composition according to any one of claims 1 to 8.

11. A battery comprising the positive electrode according to claim 10.

12. A conductive material comprising:
carbon black (A) having an average primary particle diameter of 17 nm or more and 30 nm or less;
first carbon nanotubes (B) having an average diameter of 2 nm or more and 15 nm or less; and
second carbon nanotubes (C) having an average diameter of 0.5 nm or more and less than 2 nm.

13. A slurry comprising the conductive material according to claim 12 and a dispersion medium.

14. A method for manufacturing a coating solution for positive electrode formation, the method comprising a mixing step for mixing an active material, a binding material, a conductive material, and a dispersion medium,
wherein the conductive material comprises: carbon black (A) having an average primary particle diameter of 17 nm or more and 30 nm or less; first carbon nanotubes (B) having an average diameter of 2 nm or more and 15 nm or less; and second carbon nanotubes (C) having an average diameter of 0.5 nm or more and less than 2 nm.

15. The manufacturing method according to claim 14, wherein the mixing step is a step for mixing: the active material; a binding material solution containing the binding material; a slurry (A) containing the carbon black (A); a slurry (B) containing the first carbon nanotubes (B); and a slurry (C) containing the second carbon nanotubes (C).

16. A method for manufacturing a positive electrode, the method comprising a step for coating the coating solution for positive electrode formation manufactured by the manufacturing method according to claim 14 or 15 on a current collector to form, on the current collector, a mixed material layer comprising the active material, the binding material, and the conductive material.
